# EUROPEAN PATENT APPLICATION

(11) **EP 2 879 348 A1**
(43) Date of publication of application: **03.06.2015**
(21) Application number: 14195740.7
(22) Date of filing: 01.12.2014
(51) Int. Cl.: H04L 29/06

(54) **Safe internet access system**

(30) Priority: 29.11.2013 IT PO20130008
(71) Applicant: Franchi, Fernando, 50012 Bagno a Ripoli (FI) (IT)
(72) Inventor: Franchi, Fernando, 50012 Bagno a Ripoli (FI) (IT)
(74) Representative: Martini, Riccardo

(57) **Abstract**

A system for safe access to the Internet, comprises: a private MPLS VPN-intranet network (1) accessible via PoP access points (2) and GGSN nodes (3); a server farm (4) connected to the private network (1) with PE routers (5) and provided with a firewall (6); and a gateway (7) to connect the server farm (4) to the Internet (8). Accesses to the private intranet (1) from mobile communication devices (9,10) and from fixed devices (11) are conveyed to the server farm (4), whereas all traffic input and output from the server farm (4) passes through the firewall (6) which filters the Web requests and the contents of the websites accessed.

## Description

This invention relates to a system for safe access to the Internet. More specifically, the invention relates to a new web-surfing system which allows access to, and viewing of, web content unsuitable for minors to be effectively limited.

It is known that present-day youth, school pupils and minors in general have widespread access to the Internet using any of a number of devices: smartphones, tablets, wi-fi networks in schools and libraries, at home, in shops and private organizations. Youngsters often surf the web without their parents or other responsible adults capable of checking the kind of websites they visit. There is therefore a strongly felt need for tools which can prevent inappropriate use of the Internet by minors. Such tools are generally known as "parental control" tools.

Many programs available online offer some sort of parental control but since they are software tools resident in the devices used to browse through the Internet, they can easily be eluded by anyone with a minimum of experience with IT devices.

In schools and homes, the problem is even more serious because in these contexts, networks are usually installed which allow wi-fi or wired access without any sort of Internet access control system because they are usually managed by people without the competence needed to install and manage parental control programs.

The aim of this invention is to provide a system for safe access to the Internet which overcomes the disadvantages of prior art parental control tools.

More specifically, this invention has for an aim to provide a web-surfing control system allowing youngsters, school pupils and minors in general to access the Internet safely either directly with a mobile device (for example, mobile phones, smartphones or tablets), or through local networks (for example, school or domestic networks) provided with ADSL connections or wi-fi hotspots.

A further aim of the invention is to provide a web-surfing system which prevents searching and retrieving web contents inappropriate for minors and which cannot be eluded.

These aims are achieved by an ad hoc architecture for Internet access, integrated by the use of input and output data filtering programs, as specified in the accompanying claims. The proposed access system involves using a virtual private network (VPN) of multiprotocol label switching (MPLS) type and a firewalled server farm which verify both input requests and output contents.

That way, it is possible on the one hand to provide differentiated Internet access based on the user requesting the connection (for example, pupil SIM, school or domestic ADSL) and, on the other hand, to provide the requested contents only if they comply with defined protection criteria.

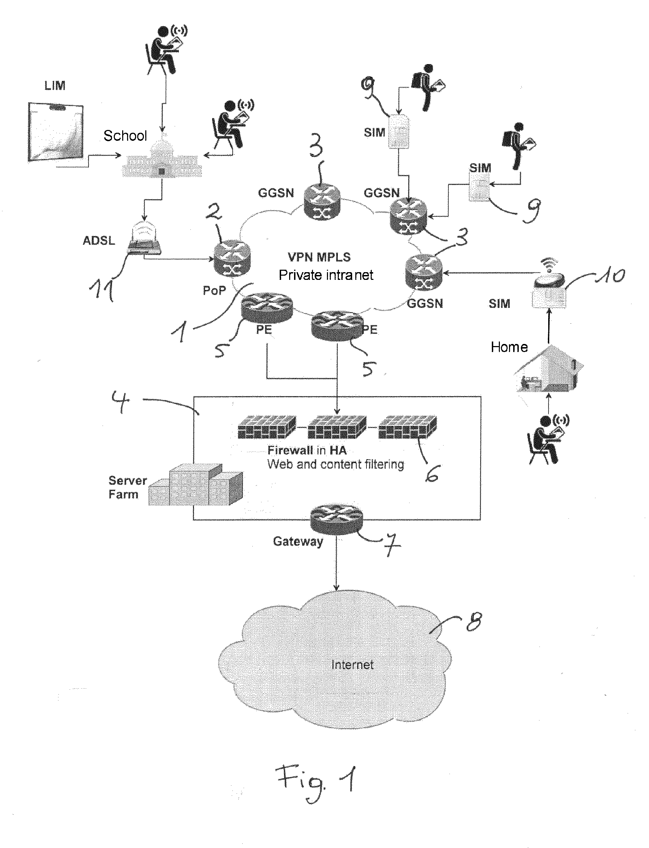

Further aims and advantages of the invention, as well as its technical features, will become more apparent from the following detailed description of non-limiting example embodiments of it, illustrated in the accompanying drawing.

In the description, the following abbreviations, acronyms and technical terms are used. VPN (virtual private network): This is a private telecommunications network established between Internet users. VPNs use shared public networks to offer the same capabilities as private lines at a lower cost. A VPN is basically the extension of a private local company network which connects geographically separate sites of the company using an IP public network for carrying data on a geographical scale and forming a LAN, called "virtual" and "private" for that reason, which is logically entirely equivalent to a specifically dedicated physical network structure.

MPLS (multiprotocol label switching): This is a technology for IP networks that directs flows of multiprotocol traffic from a source node to a destination node by using labels between pairs of adjacent routers and simple operations on the labels. The technical specifications of the protocol were published by the Internet Engineering Task Force in RFC 3031 and RFC 3032.

SIM (subscriber identity module): This is an application run on a specific smart card called UICC, colloquially referred to as SIM card.

The function of the SIM is to securely store the subscriber's unique identity, allowing the telco operator to associate the mobile device containing the SIM card with the profile of a specific user of its mobile telephone services and, consequently, to associate the user with one or more MSISDN numbers, that is voice, data and fax phone numbers. The SIM also stores a copy of the secret key necessary to authenticate the subscriber. The other copy is stored in a database of the operator's information system. SIM based identification is used in GSM, UMTS and IMS networks

FW (firewall): This is a hardware device used to defend an IT network and which may also connect two or more stretches of the network, thus guaranteeing protection in terms of network security.

The network is usually divided into two subnetworks: one, referred to as outside subnet, sometimes comprises the entire Internet, whilst the other, inside subnet, called LAN (local area network), comprises a section of any size of a set of local computers/servers. Software offering sophisticated techniques of controlling data traffic can be installed and configured on firewalls.

HA (high availability): This denotes the use of redundant components (monitoring machines, algorithms and protocols) to guarantee the continuity of the IT services provided.

Server farm (also known as webfarm): These terms denote a collection of servers located in a single place to allow centralized management, maintenance and security. Gateway: This is a network device which operates at the network layer, and the layers above that, of the ISO OSI model. Its main purpose is to carry network data packets outwards from a local area network (LAN).

Gateway is a generic term that denotes the outgoing data packet transfer service; the typical hardware device used for this purpose is a router. In a simple network there is only one gateway which transfers all outgoing traffic to the Internet. In a complex network divided into several subnets, each subnet communicates with a gateway which directs the data traffic to the other subnets or redirects it to other gateways. Often, the functions of a gateway are not limited to basic routing but integrate other services to and from the local network, such as DNS proxy, firewall, NAT and others, which are network services at a higher layer, or application layer.

PE (provider edge): These are routers whose task is to identify the traffic that is to remain within the MPLS VPN and to redirect the traffic of the MPLS VPN to the server farm.

GGSN (gateway GPRS support nodes): These are nodes which act as gateways between a GPRS wireless network and the Internet or other, private networks. They convert GPRS packets to packet data protocol (PDP), transmit the PDP data to the MPLS data network and perform authenticating and pricing functions.

ADSL (asymmetric digital subscriber line): This is a class of physical-layer communication technologies used for high-speed digital access to the Internet via twisted pair, that is, in the last mile of the telephone network (or access network). ADSL is characterized by asymmetric bandwidth: from 640 Kbps to several dozen Mbps for download and from 128Kbps to 1 Mbps for upload.

PoP (point of presence): This is a point of access to the network (router), provided by an Internet service provider (ISP), capable of routing traffic to the end users connected to it. PoPs are therefore specialized computers used to gain access to the network. Users use the same type of access, achieved through digital (ADSL) connections.

LIM (*lavagna interattiva multimediale*), Italian for multimedia interactive whiteboard: This is an interactive surface on which it is possible to write, draw, attach images, display text, and view videos or animated files. The contents displayed and processed on the whiteboard can be digitized using a specifically dedicated presentation software. The LIM is an integration tool for school classroom teaching activities which combines the display and presentation power typical of a traditional whiteboard or blackboard with the opportunities offered by digital and multimedia technologies.

ISP (Internet service provider): This is the company or organization which provides services for accessing, using, or participating in the Internet and is usually a telco operator.

With reference to the accompanying drawing, a system for safe access to the Internet according to this invention comprises:
- a private MPLS VPN-intranet network 1 accessible via PoP access points 2 and GGSN nodes 3 geographically distributed by the ISP;
- a server farm 4 connected to the private network 1 with PE routers 5 and provided with a firewall 6;
- a gateway 7 to connect the server farm 4 to the Internet 8.

As illustrated schematically in the drawing, the accesses to the private intranet 1 from mobile devices (for example. SIMs 9 contained in the smartphones or tablets of school pupils and SIMs 10 contained in domestic wi-fi hotspots) and from fixed devices (for example, ADSL 11 of schools) are conveyed to the server farm 4, which is provided with devices allowing high-quality connectivity to the Internet.

More specifically, installed on the server farm is a firewall security device 6 (FW offering web and content filtering services) with HA (high availability) which controls surfing activities, inhibiting access to prohibited websites or websites whose contents are unsuitable for use by school pupils and blocking the contents inappropriate for minors.

Each SIM 9,10 (of a pupil or domestic hotspot) and each ADSL 11 (of a school) has an identity number which enables it to be recognized by the provider of the connectivity service (ISP).

The SIMs 9,10 may be connected through the mobile network using any available technology (for example. 4G, 3G, 2G; LTE, HSDPA, UMTS, EDGE, GSM).

The ADSL connections 11 are connected typically through the landline network. According to the invention, the SIMs 9, 10 and the ADSLs 11 cannot access the Internet natively but only in the protected mode described below.

The connections of the pupil SIMs 9 and of the domestic SIMs 10 are managed by the GGSNs 3 and, similarly, the school ADSLs 11 are managed by the PoP devices 2.

The SIMs and ADSLs are enabled solely for connection to the MPLS VPN private intranet 1.

In effect, when accessing a GGSN or a PoP, after the SIMs,or ADSLs have been recognized as enabled for the MPLS traffic, authentication occurs by entering username and password associated with the device.

If authentication is successful, after entering the authentication data, the device (SIM or ADSL) is connected to the private MPLS VPN network and assigned a private static IP which allows the user to be uniquely identified.

At this point, the traffic is addressed to one of the PE routers 5, which direct the connections to the server farm 4.

On the server farm, traffic from the MPLS VPN is carried to the high availability firewalls 6 in which the firewall service is advantageously provided simultaneously by multiple firewalling machines forming part of a redundant system.

From here, traffic is directed to the Internet 8 through the gateway 7.

The firewalls are equipped with passing data traffic control programs of essentially known type which, as a function of the configuration residing therein, block or allow visits to predetermined sites and also viewing of predetermined contents.

That means that both the input requests (from the SIM/ADSL devices) and the output contents (found on the Internet as a result of the requests and directed towards the SIM/ADSL devices) can be checked and, if necessary, blocked if they do not meet set protection criteria.

Also, since each device (SIM or ADSL) is registered, it is possible to apply specific configurations to individual SIM or ADSL devices. For example, some SIM or ADSL devices may be authorized to surf social networks, and others unauthorized to do so.

If surfing is authorized, the user can access the Internet. Incoming data from the Internet is checked for appropriate content by the firewall and, if the content is appropriate, it is displayed to the user.

Typically, the network bandwidth made available on the server farm is 100 Mbps. Access to the Internet is advantageously achieved through dedicated lines using CDN (content delivery network) technology, FO (fibre optics) connected directly to the Internet backbone and high access speed (from 2 Mbps to over 1 Gbps). The line is therefore high quality.

Surfing occurs as specified below.

### a) Surfing using pupil SIM

Using the tablet's SIM, the pupil connects automatically to the GGSN and, after authentication of username and password, gains access to the MPLS VPN

At this point, surfing is possible. From this moment on, any request is carried in the private MPLS VPN. The request reaches the PE which transmits it to the server farm. Here, the request is checked for validity by the firewall. If it is not valid, it is interrupted and a message is sent to the user. If it is valid, it is addressed to the Internet. When the response is received, the firewall software checks its content: if the content is appropriate, it is displayed to the user; if the content is not appropriate, it is blocked.

### b) Surfing using domestic SIM

All the wi-fi devices in the home, including tablets used by minors, can be connected in wireless mode to the domestic modem. This modem contains a SIM which is identical to the one used in the previous case. The domestic SIM is therefore connected automatically to the GGSN of the connectivity provider (ISP) and is authenticated by username and password, allowing access to the private MPLS VPN.

At this point, the minor can surf in wi-fi mode using the tablet. All requests are carried in the MPLS VPN network and from here on, surfing occurs in the same way as in the previous example.

### c) Surfing using school ADSL

All the wi-fi devices in the school (pupils' tablets and LIM) can be connected in wireless mode to the school's ADSL. The latter is connected automatically to the PoP of the connectivity provider (ISP) and is authenticated by username and password, allowing access to the private MPLS VPN.

At this point, the pupil can surf using the tablet in wi-fi mode or the LIM. In effect, all requests are carried in the MPLS VPN network and from here on, surfing occurs in the same way as described above.

With the access system proposed, the level of protection is clearly very high because any device which connects to the Internet using a SIM or ADSL which has been configured for the system can surf only in the manner described above.

Moreover, the user has no way of bypassing the system's control barriers.

It is also evident that the access system described can also be applied to any connection made from places where young people of minor age meet: for example, libraries, games rooms, cafés, snack bars, beach resorts, discotheques and the like.

## Claims

1. A system for safe access to the Internet, comprising:
- a private MPLS VPN-intranet network (1) accessible via PoP access points (2) and GGSN nodes (3);
- a server farm (4) connected to the private network (1) with PE routers (5) and provided with a firewall (6);
- a gateway (7) to connect the server farm (4) to the Internet (8);
the accesses to the private intranet (1) from mobile communication devices (9,10) and fixed devices (11) being conveyed to the server farm (4),
all traffic input and output from the Server Farm (4) to/from the devices (9,10,11), or to/from the Internet (8), passing through the firewall (6),
the firewall (6) comprising software means for filtering the Web requests from the devices (9,10,11) or the contents of the websites accessed during surfing.

2. The system according to claim 1, wherein the mobile communication devices (9,10) and the fixed devices (11) are enabled exclusively for connection to the private intranet (1).

3. The system according to claim 1 or 2, wherein the firewall service of the server farm (4) is provided by multiple firewalling machines operating simultaneously.
